# EUROPÄISCHE PATENTSCHRIFT

(11) **EP 2 187 101 B1**
(45) Veröffentlichungstag und Bekanntmachung des Hinweises auf die Patenterteilung: **09.05.2018**
(21) Anmeldenummer: 10155069.7
(22) Anmeldetag: 02.12.2003
(51) Int. Cl.: F16H 61/02

(54) **Antriebssystem einer selbstfahrenden Arbeitsmaschine**
Propulsion system for self-proplled construction machine
Système de propulsion pour un engin de construction autopropulsé

(30) Priorität: 21.12.2002 DE 10260480
(43) Veröffentlichungstag der Anmeldung: 19.05.2010
(62) Teilanmeldung aus: 03027601.8
(73) Patentinhaber: Deere & Company, Moline, IL 61265 (US)
(72) Erfinder: Kempf, Bernd, 66484 Althornbach (DE)
(74) Vertreter: Holst, Sönke

(56) Entgegenhaltungen:
- EP-A1- 0 464 413
- EP-A1- 0 967 107
- EP-A2- 0 736 407
- EP-A2- 0 752 545
- EP-A2- 1 020 314
- EP-A2- 1 114 948
- EP-A2- 1 188 960
- WO-A-02/27214
- WO-A2-00/43695
- DE-A1- 3 838 767
- DE-A1- 4 325 788
- DE-A1- 19 622 006
- DE-A1- 19 944 792
- US-A- 4 414 863
- US-A- 5 890 982

## Beschreibung

Selbstfahrende Arbeitsmaschinen, insbesondere Erntemaschinen, werden in der Regel hydrostatisch angetrieben. Zwischen den Achsantrieb und den Hydromotor ist normalerweise ein in Stufen schaltbares Getriebe geschaltet. Diese Getriebe werden im Stand der Technik manuell geschaltet. Im Arbeits- oder Erntebetrieb werden in der Regel nur einige der verfügbaren Gangstufen benötigt (der erste und/oder zweite Gang), während beim Transport der Arbeitsmaschine oder beim Fahren auf einer Straße normalerweise schneller gefahren wird, so dass die anderen Gangstufen benötigt werden. Besonders nachteilig ist, dass es bei Schaltgetrieben für Erntemaschinen nötig ist, die Erntemaschine zum Stillstand zu bringen, bevor ein Gangwechsel durchgeführt werden kann. Während nämlich bei normalen Straßenfahrzeugen synchronisierte Getriebe verwendet werden, um die Geschwindigkeit einer Getriebewelle an die Geschwindigkeit einer anderen Getriebewelle anzupassen, damit weiche Gangwechsel möglich sind, wird bei Erntemaschinen die Synchronisiereinrichtung nicht zur Geschwindigkeitsanpassung verwendet, sondern zur Positions- oder Phasenanpassung, um sicherzustellen, dass die in Eingriff zu bringenden Zähne miteinander richtig ausgerichtet sind. Durch das Anhalten und Wiederanfahren geht viel Zeit verloren und es können dadurch, insbesondere im Straßenverkehr, gefährliche Situationen entstehen, falls ein Gangwechsel nötig wird.

In der EP 0 819 562 A wird eine elektronische Steuerung vorgeschlagen, die nach einer Gangwechsel-Eingabe eines Bedieners selbsttätig die Erntemaschine zum Stand bringt und dann den Gang wechselt. Dadurch erspart man sich zwar einen Schalthebel und dem Bediener den Kraftaufwand zum Schalten, es ist aber dennoch erforderlich, die Maschine vor dem Schaltvorgang zum Stehen zu bringen, was die oben erwähnten Nachteile hat.

Die EP 1 052 388 A2 schlägt eine Erntemaschine vor, bei der die Drehzahl des Antriebsmotors abhängig von einer selbsttätig erkannten Betriebsart gesteuert wird. Beim Ernten wird mit fester Drehzahl gefahren, während bei einer Transport- oder Straßenfahrt die Motordrehzahl von der jeweiligen Geschwindigkeit abhängt. Auch hier wird die jeweilige Gangstufe manuell ausgewählt.

Die DE 43 25 788 A1 beschreibt ein Kommunalfahrzeug mit einem Verbrennungsmotor, der eine Hydraulikpumpe antreibt. Die Hydraulikpumpe steht in Fluidverbindung mit einem Hydromotor, der wiederum ein mechanisches Getriebe mit zwei Schaltstufen antreibt, das zum Antrieb der Hinter- und/oder Vorderachse dient. Die Schaltstufe des mechanischen Getriebes wird abhängig vom Übersetzungsverhältnis des hydrostatischen Getriebes ausgewählt, d. h. bei Erreichen einer maximalen Übersetzung des hydrostatischen Getriebes wird ein Hochschaltsignal ausgelöst.

Die EP 1 020 314 A2 beschreibt einen Antriebsstrang für ein Fahrzeug mit einem Verbrennungsmotor, der eine Hydraulikpumpe antreibt. Die Hydraulikpumpe steht in Fluidverbindung mit einem Hydromotor, der wiederum ein mechanisches Getriebe mit mehreren Schaltstufen antreibt, das zum Antrieb der Räder dient. Die Schaltstufe des Getriebes wird abhängig von der Abtriebsdrehzahl des Getriebes und einer Gangwahl des Fahrers ausgewählt.

In der EP 0 752 545 A2 wird ein hydrostatischer Antrieb mit einem nachgeschalteten Lastschaltgetriebe beschrieben. Bei Anfahren wird das Lastschaltgetriebe in eine höhere Übersetzungsstufe geschaltet, wenn die Taumelscheibe der Hydropumpe ihren größten Neigungswinkel und die Taumelscheibe des Hydromotors ihren minimalen Neigungswinkel erreicht hat. Analog wird beim Schalten in höhere Übersetzungsstufen und beim Herunterschalten vorgegangen.

Die gattungsgemäße EP 1 114 948 A2 beschreibt ein Fahrzeug mit einem eine verstellbare Pumpe und einen Motor umfassenden hydrostatischen Getriebe, dem ein Lastschaltgetriebe zum Antrieb der Räder nachgeschaltet ist. Die Übersetzungsstufe wird vergrößert, wenn der Druck im Hydrauliksystem einen ersten Schwellenwert unterschreitet und verringert, wenn der Druck einen zweiten Schwellenwert überschreitet. Dabei wird die aktuelle Fahrgeschwindigkeit in der Weise berücksichtigt, dass ein Schalten nur dann erfolgt, wenn in der neuen Übersetzungsstufe eine geeignete Position der Taumelscheibe der Pumpe vorliegt, die zur vorherigen Fahrgeschwindigkeit führt.

Das der Erfindung zu Grunde liegende Problem wird darin gesehen, ein verbessertes Antriebssystem für eine selbstfahrende Arbeitsmaschine bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Bei einer selbstfahrenden Arbeitsmaschine treibt ein Verbrennungsmotor über ein Getriebe mit wählbarer Übersetzung die im Eingriff mit dem Erdboden befindlichen Elemente an, die zum Vortrieb der Arbeitsmaschine dienen und bei denen es sich in der Regel um Räder oder Gleisketten handelt. Die Übersetzungsstufe des Getriebes ist durch einen Aktor auswählbar, der durch eine Steuerung kontrolliert wird. Die Steuerung wählt die Übersetzungsstufe des Getriebes selbsttätig, d. h. unabhängig von einer Übersetzungsstufenwahleingabe einer Bedienungsperson, aus.

Der Verbrennungsmotor treibt eine Hydropumpe an, die ein Hydraulikfluid unter Druck setzt, welches wiederum einen Hydromotor antreibt. Letzterer treibt über das genannte Getriebe mit von der Steuerung selbsttätig wählbarer Übersetzung die zum Vortrieb der Arbeitsmaschine dienenden Elemente an. Derartige hydraulische Antriebe zeichnen sich durch Elastizität und Zuverlässigkeit aus.

Die Hydropumpe und/oder der Hydromotor ist mit einer verstellbaren Taumelplatte ausgestattet, um die Verdrängung und somit die Drehzahl des Hydromotors und die Vortriebsgeschwindigkeit verstellen zu können. Die Steuerung verstellt auch die Hydropumpe und/oder den Hydromotor. Somit kann die Steuerung nicht nur die Übersetzung des Getriebes, sondern auch die Vortriebsgeschwindigkeit des Arbeitsfahrzeugs beispielsweise selbsttätig oder anhand einer Bedienereingabe steuern oder unter Verwendung eines Vortriebsgeschwindigkeitssignals eines Sensors regeln. Um die Anzahl der Übersetzungsstufen des Getriebes gering zu halten, ist eine Ausführungsform, in der die Steuerung sowohl die Hydropumpe als auch den Hydromotor steuert bevorzugt, da diese Kombination bereits ohne zusätzliche Getriebeübersetzungsstufe die Realisierung eines relativ hohen Geschwindigkeitsbereichs ermöglicht. Man kann sich auf diese Weise eine oder mehrere Übersetzungsstufen des Getriebes einsparen.

Die Steuerung ist eingerichtet, die Übersetzungsstufe des Getriebes anhand von Betriebsdaten der Hydropumpe und/oder des Hydromotors auszuwählen. Die Übersetzungsstufe kann somit durch die Steuerung selbsttätig derart gewählt werden, dass die zulässigen Grenzdaten der Hydropumpe und des Hydromotors eingehalten werden. Im Konkreten hängt die Übersetzung vom Druck im Hydrauliksystem ab. Übersteigt der Druck einen festgelegten Schwellenwert, wählt die Steuerung die nächst kleinere Übersetzungsstufe aus, in der ein geringerer Druck im Hydrauliksystem herrscht. Zusätzlich hängt die von der Steuerung gewählte Übersetzungsstufe von der Vortriebsgeschwindigkeit ab. Überschreitet diese einen bestimmten Schwellenwert, wird durch die Steuerung selbsttätig die jeweils nächst höhere Übersetzungsstufe ausgewählt. Analog wird die nächst kleinere Übersetzungsstufe des Getriebes ausgewählt, wenn die Vortriebsgeschwindigkeit einen Schwellenwert unterschreitet, wobei der Schwellenwert zum Herunterschalten etwas tiefer als der Schwellenwert zum Hochschalten liegt.

Vorzugsweise werden der Steuerung Informationen hinsichtlich der Betriebsart zugeführt, in der sich die Arbeitsmaschine jeweils befindet. Anhand dieser Informationen kann die Steuerung die geeignete Übersetzungsstufe des Getriebes auswählen.

Die Betriebsart kann anhand einer durch die Bedienungsperson manuell oder per Fuß oder akustisch oder auf eine beliebige andere Weise betätigbaren Betriebsartenwahleinrichtung erkannt werden. Der Steuerung wird eine Information über die von der Bedienungsperson durch die Betriebsartenwahleinrichtung gewählte Betriebsart zugeführt. Im Fall einer Erntemaschine kann die Betriebsartenwahleinrichtung ein an sich bekannter Feld/Straßenschalter sein, mit dem die Erntemaschine zwischen einer Erntebetriebsart und einer Straßenfahrbetriebsart umgeschaltet wird. Alternativ oder zusätzlich wäre denkbar, die Betriebsart der Arbeitsmaschine anhand des Zustands eines Elements der Arbeitsmaschine zu erkennen. Befindet sich das Element in seiner Arbeitsstellung, z. B. ein in die Ernteposition abgesenktes Schneidwerk, ist erkennbar, dass sich die Arbeitsmaschine in einer Arbeitsbetriebsart befindet. Bezüglich einer selbsttätigen Erkennung der Betriebsart wird ergänzend auf die Offenbarung der EP 1 052 388 A verwiesen, deren Offenbarung durch Verweis mit in die vorliegenden Unterlagen aufgenommen wird.

Die Übersetzungsstufe wird in einer bevorzugten Ausführungsform durch die Steuerung abhängig davon ausgewählt, ob sich die Arbeitsmaschine in einer Arbeitsbetriebsart oder einer Transport- oder Straßenbetriebsart befindet. Beim Arbeitsbetrieb (beispielsweise beim Ernten) wird der Hauptteil der vom Verbrennungsmotor bereitgestellten Leistung in der Regel für die Arbeit benötigt, so dass der Vortrieb nur mit geringerer Geschwindigkeit erfolgt als beim Transport. Es bietet sich daher an, bei der Arbeit weniger Übersetzungsstufen als beim Fahren auf einer Straße bereitzustellen. Auch beim Rückwärtsfahren wird in der Regel ein kleinerer Geschwindigkeitsbereich - und somit weniger Übersetzungsstufen des Getriebes - benötigt, so dass es sinnvoll ist, die Übersetzungsstufe abhängig von der jeweils gewählten Fahrtrichtung auszuwählen. In der Regel reicht es aus, beim Arbeitsbetrieb bzw. beim Rückwärtsfahren nur eine festgelegte Übersetzungsstufe bereitzustellen. Die Steuerung wählt dann selbsttätig diese Übersetzungsstufe aus, wenn die Arbeitsmaschine sich im Arbeitsbetrieb bzw. Rückfahrbetrieb befindet. Hingegen kann die Steuerung beim Straßen- oder Transportbetrieb unter mehreren (in der Regel allen) verfügbaren Gangstufen auswählen.

Weiterhin wird vorgeschlagen, dass die Steuerung auch die Drehzahl des Antriebsmotors vorgeben kann. Dadurch kann im Arbeitsbetrieb, in dem in der Regel eine höhere Leistung (und somit Drehzahl) erforderlich ist als bei einer Transport- oder Straßenfahrt, selbsttätig eine höhere Drehzahl angesteuert werden als im Straßenbetrieb, in dem eine niedrigere Drehzahl hinreicht, bei der der Verbrennungsmotor sparsamer und leiser arbeitet. Im Arbeitsbetrieb wird somit vorzugsweise eine feste Drehzahl des Verbrennungsmotors vorgegeben. Alternativ kann der Bediener eine Drehzahl auswählen, wobei ihm der gesamte Drehzahlbereich des Verbrennungsmotors oder ein besonders sinnvoller Teilbereich daraus zur Verfügung steht. Im Straßen- oder Transportbetrieb bietet es sich hingegen an, eine feste Drehzahl des Verbrennungsmotors vorzugeben (die in der Regel niedriger als im Arbeitsbetrieb ist) oder sie abhängig von der jeweiligen Belastung des Verbrennungsmotors zu steuern. Eine belastungsabhängige Steuerung der Drehzahl des Verbrennungsmotors kann auch im Arbeitsbetrieb sinnvoll sein.

In der Straßen- oder Transportbetriebsart ist die Vortriebsgeschwindigkeit der Arbeitsmaschine in der Regel durch eine Bedienungsperson mittels eines Bedienungselements eingebbar. Dazu kann ihm ein von Hand zu verstellender Fahrhebel und/oder ein Pedal zur Verfügung stehen. Auch beim Arbeitsbetrieb kann durch den Bediener die Vortriebsgeschwindigkeit der Arbeitsmaschine durch das Bedienungselement vorgebbar sein. Es bietet sich an, dem Bediener in beiden Betriebsarten den verfügbaren Bewegungsbereich des Bedienungselements zur Verfügung zu stellen. In der Straßen- oder Transportbetriebsart ist der erzielbare Geschwindigkeitsbereich größer als in der Arbeitsbetriebsart, in der hingegen eine recht feinfühlige Geschwindigkeitsvorgabe möglich ist. Es besteht jedoch auch zusätzlich oder alternativ die Möglichkeit, in der Arbeitsbetriebsart die Vortriebsgeschwindigkeit der Arbeitsmaschine in Abhängigkeit von ihrer Auslastung zu steuern.

Die Erfindung eignet sich insbesondere für Erntemaschinen. Es bietet sich an, in der Straßen- oder Transportbetriebsart selbsttätig die Arbeitseinrichtungen, d. h. insbesondere die Gutförder- und/oder Gutbearbeitungseinrichtungen zu deaktivieren. In der Arbeits- (Ernte-) Betriebsart sind hingegen vorzugsweise alle Einrichtungen deaktiviert, die nur beim Fahren auf einer Straße benötigt werden, wie z. B. die Straßenverkehrsbeleuchtung.

Das bisher beschriebene Antriebssystem könnte mit Getrieben verwendet werden, die einen Stillstand der Arbeitsmaschine erfordern, bevor ein Wechsel der Übersetzungsstufe durchgeführt wird. Um ein automatisches Schalten der Übersetzungsstufe des Getriebes zu ermöglichen, könnte eine Steuerung verwendet werden, die vor dem eigentlichen Schaltvorgang selbsttätig die Arbeitsmaschine anhält und anschließend wieder anfahren lässt. Wegen der damit verbundenen Nachteile ist jedoch eine einfachere und vorteilhaftere Lösung bevorzugt. Alternativ oder zusätzlich zur Lehre des Anspruchs 1 wird daher vorgeschlagen, dass die Übersetzungsstufe des Getriebes bei fahrender Arbeitsmaschine wechselbar ist. Dadurch kann auf ein Anhalten der Arbeitsmaschine vor dem Schalten verzichtet werden.

Ein geeignetes Getriebe könnte ein an sich von Automobilen her bekanntes Getriebe sein, das mit Synchronisierungseinrichtungen ausgestattet ist. Wegen der bei Arbeitsmaschinen recht hohen zu übertragenden Drehmomente sind derartige Getriebe jedoch aufwändig und kostspielig. Für die vorliegende Anwendung ist ein Getriebe bevorzugt, das ein Planetengetriebe umfasst. Das Planetengetriebe umfasst ein Sonnenrad und einen Planetenradträger. Es besteht die Möglichkeit, das Planetengetriebe bei einer Übersetzungsstufe in sich zu blockieren, während die Planetenräder in der anderen Übersetzungsstufe auf dem Sonnenrad abrollen.

Diese Übersetzungsmöglichkeiten können auf verschiedene Arten realisiert werden. In einer Ausführungsform wird der Planetenradträger in einer Übersetzungsstufe mit der Ausgangs- bzw. Eingangswelle gekoppelt. Kämmen die Planetenräder mit Planetenrädern eines anderen Planetenradsatzes, die über ein anderes Zahnrad mit der Ausgangs- bzw. Eingangswelle drehmomentschlüssig verbunden sind, ist das Planetengetriebe in sich gesperrt, man erhält ein Übersetzungsverhältnis von 1 zu 1. Wird der Planetenradträger hingegen arretiert, erfolgt die Drehmomentübertragung über das Zahnrad, die Planetenradsätze und das Sonnenrad (oder umgekehrt), so dass eine Unter- oder Übersetzung realisierbar ist.

In einer anderen Ausführungsform umfasst das Planetengetriebe ein Ringrad, ein Planetenrad und ein Sonnenrad. Eines dieser Elemente dient als Antrieb, eines als Abtrieb. Das dritte Element wird abhängig von der gewählten Übersetzungsstufe mit unterschiedlicher Geschwindigkeit angetrieben, insbesondere indem es mit einem der anderen Elemente antriebsverbunden wird, bzw. angehalten. In einer bevorzugten Ausführungsform ist das Ringrad in einer ersten Übersetzungsstufe mit dem Sonnenrad gekoppelt und wird in einer zweiten Übersetzungsstufe ortsfest gehalten. Der Planetenradträger kann dabei als An- oder Abtrieb dienen, während das Sonnenrad entsprechend Ab- oder Antrieb ist. Der Vorteil dieser Lösung liegt darin, dass nur eine trennbare Kupplung zwischen dem dritten Element (hier das Ringrad) und einem der anderen Elemente (hier: Sonnenrad) erforderlich ist und eine Bremse für das dritte Element.

Bei den beschriebenen Ausführungsformen der Planetengetriebe erübrigt sich eine Synchronisation, da alle Zahnräder stets im Eingriff sind.

Schließlich bleibt anzumerken, dass anstelle eines Verbrennungsmotors auch eine Brennstoffzelle Verwendung finden kann, wobei ein mit ihr elektrisch verbundener Elektromotor die Antriebsleistung bereitstellt. Auch derartige Anordnungen fallen in den Schutzbereich der Ansprüche.

In den Zeichnungen ist ein nachfolgend näher beschriebenes Ausführungsbeispiel der Erfindung dargestellt. Es zeigt:
- Fig. 1: eine selbstfahrende Arbeitsmaschine in Seitenansicht und in schematischer Darstellung,
- Fig. 2: ein Schema des Antriebssystems der Arbeitsmaschine aus Figur 1, und
- Fig. 3: ein Schema einer alternativen Ausführungsform des Getriebes aus Figur 2.

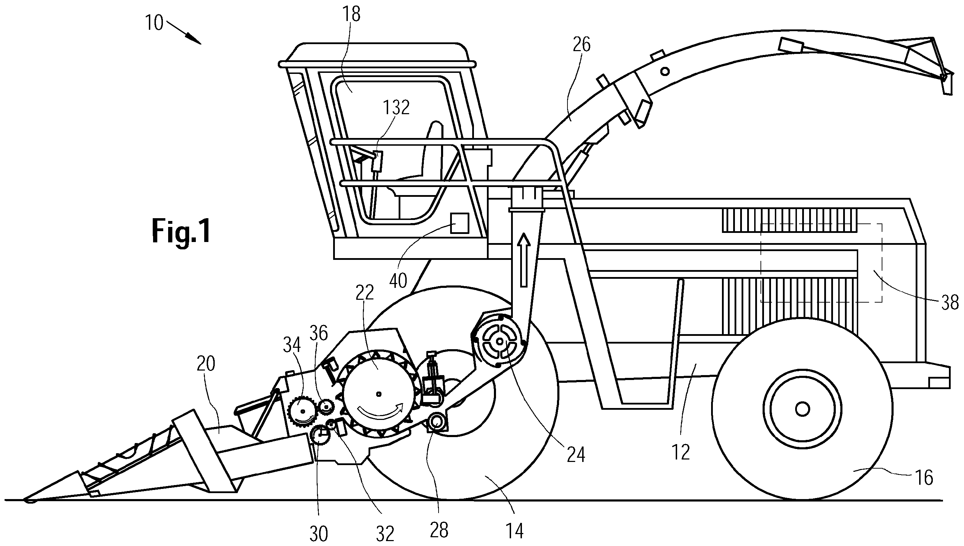

Eine in Figur 1 gezeigte selbstfahrende Arbeitsmaschine 10 in der Art eines selbstfahrenden Feldhäckslers baut sich auf einem Rahmen 12 auf, der von vorderen und rückwärtigen (lenkbaren) Rädern 14 und 16 getragen wird. Die Bedienung der Arbeitsmaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen, wird durch vier Einzugswalzen 30, 32, 34, 36 einer Häckseltrommel 22 zugeführt, die es in kleine Stücke häckselt und es einer Fördervorrichtung 24 aufgibt. Das Gut verlässt die Arbeitsmaschine 10 zu einem nebenher fahrenden Anhänger über einen drehbaren Austragsschacht 26. Zwischen der Häckseltrommel 22 und der Fördervorrichtung 24 ist eine Nachzerkleinerungsvorrichtung mit zwei zusammenwirkenden Walzen 28 angeordnet, durch die das geförderte Gut der Fördervorrichtung 24 tangential zugeführt wird.

Die Antriebsleistung zum Vortrieb und für den Betrieb der Arbeitsmaschine 10 wird durch einen Verbrennungsmotor 38 bereitgestellt, bei dem es sich in der Regel um einen Dieselmotor handelt. Eine elektronische Steuerung 40 ist in der Fahrerkabine 18 angeordnet.

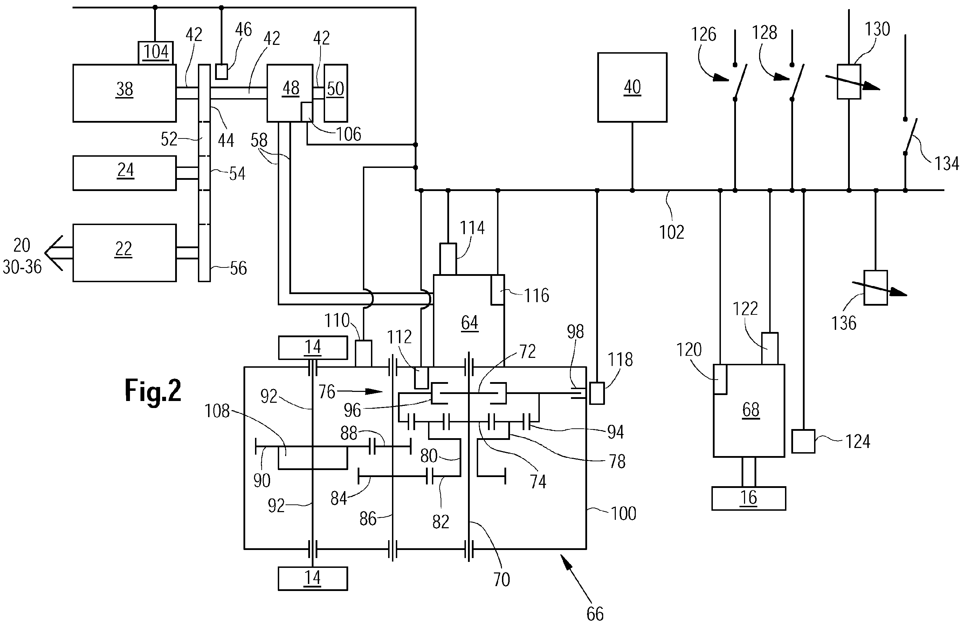

In der Figur 2 ist das Antriebssystem der Arbeitsmaschine 10 schematisch dargestellt. Der Verbrennungsmotor 38 treibt eine Welle 42 an, auf der eine Kupplung 44 angeordnet ist, die durch einen Elektromagneten 46 ein- und ausschaltbar ist. Die Welle 42 treibt außerdem eine Hydropumpe 48 und eine Versorgungspumpe 50 an, die zur Versorgung der Hydrauliksysteme der Arbeitsmaschine 10 mit Ausnahme der zum Vortrieb dienenden Hydromotore dient. Die Kupplung 44 ist innerhalb einer Riemenscheibe angeordnet, um die ein Treibriemen 52 umläuft, der auch um eine erste Riemenscheibe 54 und eine zweite Riemenscheibe 56 umläuft. Die erste Riemenscheibe 54 steht mit der Fördervorrichtung 24 in Antriebsverbindung, während die zweite Riemenscheibe 56 mit der Häckseltrommel 22 in Antriebsverbindung steht. Von der Häckseltrommel 22 wird die Antriebsleistung für die Erntegutaufnahmevorrichtung 20 und die Einzugswalzen 30, 32, 34 und 36 abgenommen. Ein Teil der (oder die gesamte) Antriebsleistung der Einzugswalzen 30, 32, 34, 36 kann auch durch einen zusätzlichen Hydraulikmotor bereitgestellt werden, der durch die Versorgungspumpe 50 oder eine andere, mit dem Verbrennungsmotor 38 in Antriebsverbindung stehende Hydropumpe angetrieben wird und die Einzugswalzen über ein Planetengetriebe antreibt, das zusätzlich von der Häckseltrommel 22 her angetrieben wird, wie in der DE 198 12 500 A beschrieben. Dadurch kann die Schnittlänge stufenlos eingestellt werden. Denkbar ist aber auch die Verwendung eines in Stufen schaltbaren Getriebes für die Einzugswalzen.

Die Hydropumpe 48 ist durch Hydraulikleitungen 58 mit einem Hydromotor 64 verbunden. Der Hydromotor 64 steht über ein Getriebe 66 mit den vorderen Rädern 14 in Antriebsverbindung. Zwischen dem Getriebe 66 und den vorderen Rädern 14 ist ein Differentialgetriebe 108 und jeweils eine Antriebswelle 92 angeordnet, welche die Räder 14 über (nicht eingezeichnete) Achsendantriebe antreiben. Denkbar wäre auch eine Ausführungsform, in der jedem vorderen Rad ein Hydromotor 64 zugeordnet ist.

Ein zweiter Hydromotor 68 ist über (aus Gründen der Übersichtlichkeit nicht eingezeichnete) Hydraulikfluid übertragende Leitungen ebenfalls mit der Hydropumpe 48 verbunden. Der zweite Hydromotor 68 steht mit den hinteren Rädern 16 in Antriebsverbindung, wobei ebenfalls ein Differentialgetriebe vorgesehen sein kann oder je ein Hydromotor 68 jedem hinteren Rad 16 zugeordnet ist.

Das Getriebe 66 umfasst eine direkt vom Hydromotor 64 angetriebene Eingangswelle 70, die eine zylindrische Kupplungsscheibe 72 trägt. Außerdem ist ein Sonnenrad 74 eines Planetengetriebes 76 drehfest auf der Eingangswelle 74 befestigt. Ein Planetenradträger 78 des Planetengetriebes 76 ist über eine Hohlwelle 80, die koaxial zur Eingangswelle 70 angeordnet und darauf drehbar gelagert ist, mit einem Zahnrad 82 verbunden, das über ein weiteres Zahnrad 84 mit einer Zwischenwelle 86 drehmomentübertragend gekoppelt ist. Die Zwischenwelle 86 treibt ein Zahnrad 88 an, das mit einem Zahnrad 90 kämmt, welches ein Differentialgetriebe 108 antreibt, das zwei Ausgangswellen 92 antreibt. Die Ausgangswellen 92 stehen jeweils mit einem der vorderen Räder 14 in Antriebsverbindung.

Das Ringrad 94 des Planetengetriebes 76 ist durch eine schaltbare Kupplung mit der Kupplungsscheibe 72 in und außer Eingriff bringbar. Außerdem ist eine Bremseinrichtung 98 zwischen dem Gehäuse 100 des Getriebes 66 und dem Ringrad 94 angeordnet, mit der das Ringrad 94 stationär gehalten werden kann.

Ist die Bremse 98 aktiviert und die Kupplung 96 deaktiviert, wird das Ringrad 94 angehalten. Der Hydromotor 64 treibt dann über die Eingangswelle 70 das Sonnenrad 74 an, wobei das Planetengetriebe 76 eine Untersetzung realisiert. Der Abtrieb erfolgt über den Planetenradträger 78, die Hohlwelle 80, das Zahnradpaar 82, 84, die Zwischenwelle 86, das Zahnradpaar 88, 90 und die Ausgangswelle 92 (und die Achsendantriebe) zum vorderen Rad 14.

Ist die Bremse 98 deaktiviert und die Kupplung 96 aktiviert, wird das Ringrad 94 über die Eingangswelle 70 und die Kupplung 96 durch den Hydromotor 64 mit der Drehzahl angetrieben, mit der auch das Sonnenrad 74 angetrieben wird. Die Geschwindigkeitsdifferenz zwischen Ringrad 94 und Sonnenrad 74 ist somit geringer als bei der oben beschriebenen Betriebsart, in der das Ringrad 94 ortsfest gehalten wird, und das Planetengetriebe 76 ist in sich blockiert, man erhält ein Übersetzungsverhältnis von 1 zu 1. Der Abtrieb erfolgt ansonsten wie im vorigen Absatz beschrieben.

Man erhält auf diese Weise bei deaktivierter Kupplung 96 und aktivierter Bremse 98 eine erste Übersetzungsstufe und bei aktivierter Kupplung 96 und deaktivierter Bremse 98 eine zweite Übersetzungsstufe, die ein höheres Übersetzungsverhältnis (und somit bei gegebener Drehzahl des Hydromotors 64 eine höhere Vortriebsgeschwindigkeit) bietet als die erste Übersetzungsstufe. Der Schaltvorgang kann auch bei fahrender Arbeitsmaschine 10 durchgeführt werden, da die Zahnräder des Planetengetriebes 76 sich stets im Eingriff befinden und keine Synchronisation erforderlich ist. Ein Anhalten der Arbeitsmaschine 10 zum Durchführen eines Schaltvorgangs erübrigt sich.

Die Steuerung 40 kontrolliert die steuerbaren Elemente des Antriebssystems und ist mit einer Reihe an Sensoren verbunden. Dazu ist ein Bus 102 (in der Regel ein LBS oder CAN-Bus) vorgesehen, mit dem die Steuerung 40 über einen Mikroprozessor oder einen anderen geeigneten Schaltkreis verbunden ist. Die steuerbaren Elemente und die Sensoren sind ebenfalls zur Datenübertragung über den Bus 102 mit Mikroprozessoren oder anderen geeigneten Schaltkreisen ausgestattet. Es können auch noch beliebige weitere Sensoren und Aktoren an den Bus 102 angeschlossen werden. Außerdem könnten einige (oder alle) der Sensoren und/oder Aktoren direkt an die Steuerung 40 angeschlossen sein, oder über eine Kommunikationseinheit an den Bus 102 angeschlossen werden.

Der Bus 102 ist mit einer elektronischen Steuereinheit 104 des Verbrennungsmotors 38 verbunden. Der Bus 102 ist weiterhin mit dem Elektromagneten 46 zum Ein- und Ausschalten der Kupplung 44 zum Antrieb der Häckseltrommel 22 und der Fördervorrichtung 24 verbunden und mit einem elektromagnetischen Aktor 106, der zum Verstellen einer Taumelscheibe der Hydropumpe 48 eingerichtet ist. Der Aktor 106 ermöglicht es, die von der Hydropumpe 48 bereitgestellte Flussrate stufenlos oder in Stufen zu verändern. Außerdem ermöglicht er, die Flussrichtung des Hydrofluids umzukehren, so dass der Hydromotor 64 zwischen Vor- und Rückwärtsfahrbetrieb umschaltbar ist. Ein Drehzahlsensor 110, der die Drehzahl der Ausgangswelle 92 des Getriebes 66 erfasst (z. b. optisch oder magnetisch), ist mit dem Bus 102 verbunden, wie auch ein elektromagnetischer Aktor 112, der zum Ein- und Ausschalten der Kupplung 96 eingerichtet ist. Ein an den Hydromotor 64 angeflanschter Drucksensor 114 erfasst den am Hydromotor 64 anstehenden Druck des Hydraulikfluids und ist mit dem Bus 102 verbunden, wie auch ein elektromagnetischer Aktor 116, der zur Verstellung einer Taumelscheibe des Hydromotors 64 eingerichtet ist. Der Aktor 116 ermöglicht eine Veränderung des Schluckvolumens des Hydromotors 64 und somit bei gegebener Hydraulikfluidflussrate eine Einstellung der Drehzahl der Eingangswelle 70. Ein ebenfalls elektromagnetischer Aktor 118 dient zum Aktivieren und Deaktivieren der Bremse 98 und ist mit dem Bus 102 verbunden. Auch der zweite Hydromotor 68 ist mit einem elektromagnetischen Aktor 120 ausgestattet, der eine Taumelscheibe des zweiten Hydromotors 68 verstellt und mit dem Bus verbunden ist. Der zweite Hydromotor 68 ist mit einem Drucksensor 122 zur Erfassung des am zweiten Hydromotor 68 anstehenden Drucks und mit einem Drehzahlsensor 124 zur Erfassung der Ausgangsdrehzahl des zweiten Hydromotors 68 ausgestattet, die jeweils mit dem Bus 102 verbunden sind. Anstelle der genannten elektromagnetischen Aktoren 46, 106, 108, 112, 116, 118 und/oder 120 könnten auch hydraulisch gesteuerte Aktoren verwendet werden, die über geeignete Ventile elektromagnetisch gesteuert werden.

Schließlich ist der Bus 102 noch mit einem ersten Schalter 126, einem zweiten Schalter 128, einem dritten Schalter 134 und einem Potentiometer 130 sowie einem Bedienungselement 136, das ebenfalls in Form eines Potentiometers realisiert ist, verbunden, die in der Fahrerkabine 18 in bequemer Reichweite der Bedienungsperson angeordnet sind. Der erste Schalter 126 dient zum Umschalten zwischen dem Arbeits- (d. h. Ernte-) Betrieb und einem Straßen- oder Transportbetrieb. Der zweite Schalter 128 dient zum Ein- und Ausschalten des Allradantriebs. Das Potentiometer 130 dient zur Erfassung der Stellung eines schwenk- und/oder verschiebbaren Fahrhebels 132, der zur Vorgabe der Vortriebsgeschwindigkeit dient. Der dritte Schalter 134 dient zum Ein- und Ausschalten der Arbeitseinrichtungen mittels der Kupplung 44. Das Bedienungselement 136 dient zur Vorgabe der Drehzahl des Verbrennungsmotors 38.

Die Arbeitsweise der Arbeitsmaschine 10 und des beschriebenen Antriebssystems ist folgendermaßen:
Die Steuerung 40 prüft regelmäßig (z. B. alle 10 ms), ob sich der erste Schalter 126 in der dem Straßen- oder Transportbetrieb zugeordneten Stellung befindet. Es wäre auch denkbar, anstelle der Stellung des ersten Schalters 126 die Betriebsstellung oder -art eines Arbeitselements der Arbeitsmaschine 10 zu erfassen, z. B. mit einem Sensor zu überprüfen, ob die Erntegutaufnahmevorrichtung 20 angehoben (Außerbetriebsstellung) oder abgesenkt ist (Betriebsstellung).

Ist der erste Schalter 126 nicht in der Straßen- oder Transportbetriebsstellung, befindet sich die Arbeitsmaschine somit im Arbeits- (Ernte-) Betrieb, wird die Kupplung 96 des Planetengetriebes 76 durch den Aktor 112 deaktiviert und (kurz danach) die Bremse 98 durch den Aktor 118 aktiviert. Es wird somit permanent die erste Übersetzungsstufe des Getriebes 66 gewählt, da der von ihr bereitgestellte Vortriebsgeschwindigkeitsbereich für den Erntebetrieb hinreicht. Der Verbrennungsmotor 38 wird durch die Steuerung 40 über die elektronische Steuereinheit 104 auf eine für den Arbeitsbetrieb geeignete Drehzahl gebracht, die fest vorgegeben oder durch die Bedienungsperson über das Bedienungselement 136 veränderbar sein kann. In der Arbeitsbetriebsart ermöglicht die Steuerung 40 der Bedienungsperson, über den dritten Schalter 134 und den Elektromagneten 46 die Kupplung 44 einzuschalten, so dass die Arbeitseinrichtungen (Fördervorrichtung 24, Häckseltrommel 22, Einzugswalzen 30-36 und Erntegutaufnahmevorrichtung 20) in Betrieb gesetzt werden können.

Die Steuerung 40 steuert in der Arbeitsbetriebsart die Aktoren 106, 116 und 120 der Hydropumpe 48 und der Hydromotoren 64, 68 entsprechend einer durch den Fahrhebel 132 vorgegebenen Soll-Geschwindigkeit, die durch die Bedienungsperson eingebbar ist.

Der Fahrhebel 132 kann zum Vorwärtsfahren nach vorn und zum Rückwärtsfahren nach hinten geschwenkt werden. Anhand des Potentiometers 130 werden durch die Steuerung 40 die Aktoren 106, 116 und 120 gesteuert. Befindet sich der Fahrhebel 132 in einer Rückwärtsfahrstellung, schaltet die Steuerung 40 über den Aktor 106 die Hydropumpe 48 in eine Rückwärtsstellung. Beim Rückfahrbetrieb wird eine Aktivierung des dritten Schalters 134 ignoriert, so dass die Arbeitseinrichtungen selbsttätig außer Betrieb gesetzt werden. In beiden Fahrtrichtungen entspricht der Bewegungsbereich des Fahrhebels 132 dem ganzen in der Arbeitsbetriebsart verfügbaren Geschwindigkeitsbereich. Es gibt also keine Endbereiche des Bewegungsbereichs des Fahrhebels 132, die keine Geschwindigkeitsänderung mehr bewirken und es ist eine feinfühlige Einstellung der Geschwindigkeit möglich. Die Signale der Drucksensoren 114, 122 und der Geschwindigkeitssensoren 110, 124 werden von der Steuerung 40 beim Einstellen der Aktoren 106, 116, 120 berücksichtigt und dazu verwendet, die gewünschte Vortriebsgeschwindigkeit der Arbeitsmaschine 10 zu erzielen, jedoch ein Durch- oder Rückwärtsdrehen der Räder 14, 16 bei allen äußeren Betriebsbedingungen zu vermeiden. In diesem Zusammenhang wird auf die Offenbarung der DE 102 11 779 A verwiesen, die durch Verweis mit in die vorliegenden Unterlagen aufgenommen wird.

Anzumerken ist, dass im Arbeitsbetrieb auch denkbar ist, den Gutdurchsatz durch einen beliebigen Sensor zu erfassen (z. B. für die Position der gegen die Kraft einer Feder nach oben bewegbaren Einzugswalze 36) und anstelle des Signals vom Potentiometer 130 zur Regelung der Vortriebsgeschwindigkeit zu verwenden.

Ist der zweite Schalter 128 in der Nicht-Allradbetriebsstellung, veranlasst die Steuerung 40 durch ein weiteres (nicht eingezeichnetes) Ventil, dass der zweite Hydromotor 68 von den Hydraulikleitungen 62 getrennt wird und sich frei mit den Rädern 16 mitdreht.

Stellt die Steuerung 40 hingegen fest, dass sich der erste Schalter 126 in der Straßen- oder Transportbetriebsstellung befindet, ignoriert die Steuerung 40 den dritten Schalter 134 (bzw. bringt ihn durch einen weiteren Aktor selbsttätig in die Stellung, die einer deaktivierten Kupplung 46 entspricht). Im Straßen- oder Transportbetrieb ist somit keine Aktivierung der Arbeitseinrichtungen möglich.

Danach überprüft die Steuerung 40, ob sich das Potentiometer 130 in einer Stellung befindet, die einem Rückfahrbetrieb entspricht. Ist das der Fall, wird der Aktor 106 in eine Rückwärtsfahrstellung verbracht und es bleiben oder werden die Kupplung 96 deaktiviert und (kurz danach) die Bremse 98 aktiviert, so dass das Getriebe 66 in der ersten Übersetzungsstufe verbleibt oder in sie gelangt. Der durch den Fahrhebel 132 vorgebbare Rückfahrgeschwindigkeitsbereich entspricht seinem gesamten der Rückfahrrichtung entsprechenden Bewegungsbereich, bei dem der Fahrhebel 132 in der Regel nach hinten bewegt wird. Die Steuerung 40 steuert die Aktoren 106, 116 und 120 unter Berücksichtigung der Signale der Sensoren 110, 114, 122 und 124 und des Potentiometers 130, wie oben beschrieben. Der zweite Hydromotor 68 kann durch den zweiten Schalter 128 aktiviert bzw. deaktiviert werden.

Befindet sich der Fahrhebel 132 jedoch in einer Stellung, die einem Vorwärtsfahrbetrieb entspricht (und ist der erste Schalter in der der Straßen- oder Transportbetriebsart entsprechenden Stellung), prüft die Steuerung 40 anhand der Signale der Geschwindigkeitssensoren 110, 124 die aktuelle Vortriebsgeschwindigkeit des Arbeitsfahrzeugs 10. Liegt sie unterhalb einem festgelegten Schwellenwert, bleibt oder werden unter Verwendung der Aktoren 112 und 118 die Kupplung 96 deaktiviert (ausgeschaltet) und (kurz danach) die Bremse 98 aktiviert (eingeschaltet), das Getriebe 66 befindet sich somit in der ersten Übersetzungsstufe. Liegt die aktuelle Geschwindigkeit jedoch über diesem festgelegten Schwellenwert und signalisiert der Drucksensor 114 einen zulässigen Druck, wird die Bremse 98 deaktiviert und kurz danach die Kupplung 96 durch die jeweiligen Aktoren 112, 188 aktiviert, so dass die zweite Übersetzungsstufe des Getriebes 66 ausgewählt ist. In der Straßen- oder Transportbetriebsart steht somit der volle durch das Getriebe 66 bereitgestellte Geschwindigkeitsbereich zur Verfügung. Der durch den Fahrhebel 132 vorgebbare Vorwärtsgeschwindigkeitsbereich entspricht seinem gesamten der Vorwärtsfahrtrichtung entsprechenden Bewegungsbereich, bei dem der Fahrhebel 132 in der Regel nach vorn bewegt wird. Es ist zwar keine so feinfühlige Einstellung wie im Arbeits- und Rückfahrbetrieb möglich, dafür aber eine Anwahl aller möglichen Geschwindigkeiten. In der Straßen- oder Transportbetriebsart könnte die Vortriebsgeschwindigkeit und/oder Rückfahrgeschwindigkeit der Arbeitsmaschine 10 auch durch ein Pedal vorgegeben werden.

Die Steuerung kann einen Vergleich zwischen der jeweiligen Fahrgeschwindigkeit, die durch die Geschwindigkeitssensoren 110, 124 erfasst wird, und einer zulässigen Höchstgeschwindigkeit durchführen. Beim Erreichen oder Überschreiten der Höchstgeschwindigkeit werden Eingaben zur Geschwindigkeitserhöhung ignoriert, bzw. die Geschwindigkeit wird selbsttätig vermindert. Diesbezüglich wird auf die Offenbarung der DE 101 09 775 A verwiesen, die durch Verweis mit in die vorliegenden Unterlagen aufgenommen wird.

Bei beiden Übersetzungsstufen des Getriebes 66 berücksichtigt die Steuerung 40 in der Straßen- oder Transportbetriebsart bei Vorwärts- und Rückwärtsfahrt die Signale von den Geschwindigkeitssensoren 110, 124 und den Drucksensoren 114, 122, um die gewünschte Vortriebsgeschwindigkeit zu erreichen, jedoch ein Durch- oder Rückwärtsdrehen der Räder 14, 16 zu verhindern, wie oben bereits bezüglich des Arbeitsbetriebs erläutert. Weiterhin veranlasst die Steuerung 40 selbsttätig einen Übergang von der zweiten in die erste Übersetzungsstufe, indem die Kupplung 96 deaktiviert und (vorzugsweise kurz danach) die Bremse 98 aktiviert wird, sobald die durch die Geschwindigkeitssensoren 110, 124 gemessene Vortriebsgeschwindigkeit unter den oben erwähnten Schwellenwert fällt oder der Drucksensor 114 einen zu hohen Wert liefert. Der Schwellenwert zum Herunterschalten kann auch etwas tiefer liegen als der Schwellenwert zum Hochschalten, um durch diese Hysterese ein häufiges, unnötiges Schalten der Kupplung 96 und der Bremse 98 im Geschwindigkeitsbereich nahe des Schwellenwerts zu vermeiden.

Bei der Wahl der Übersetzungsstufe berücksichtigt die Steuerung 40 auch den an den Hydromotoren 64, 68 anliegenden Druck des Hydraulikfluids. Übersteigt er, z. B. beim Fahren an einer Steigung, einen festgelegten Schwellenwert, veranlasst die Steuerung 40 selbsttätig einen Übergang von der zweiten auf die erste Übersetzungsstufe, so dass keine Grenzwerte der Hydromotoren 64, 68 überschritten werden und letztere sich nicht übermäßig erhitzen.

Der zweite Hydromotor 68 kann, wie bereits oben erwähnt, durch den zweiten Schalter 128 ein- und ausgeschaltet werden. Es wäre auch denkbar, auf den zweiten Hydromotor 68 und den zweiten Schalter 128 zu verzichten.

Die Drehzahl des Verbrennungsmotors 38 wird auch in der Straßen- oder Transportbetriebsart durch die Steuerung 40 über die elektronische Steuereinheit 104 vorgegeben. Sie kann auf einen festen oder durch den Bediener innerhalb eines (in der Regel gegenüber dem verfügbaren Drehzahlbereich eingeschränkten) Bereichs mittels des Bedienungselements 136 manuell vorgegebenen Wert eingestellt werden, der kleiner als in der Arbeitsbetriebsart ist, um den Betriebsstoffverbrauch und die Geräuschemission zu vermindern. Es wäre auch denkbar, die Drehzahl des Verbrennungsmotors 38 abhängig von seiner Belastung zu steuern, die durch die Steuerung 40 beispielsweise anhand der Drucksensoren 114, 122 und der Geschwindigkeitssensoren 110, 124 berechnet oder anhand von in der elektronischen Steuereinheit 104 vorhandenen Daten bestimmt werden kann.

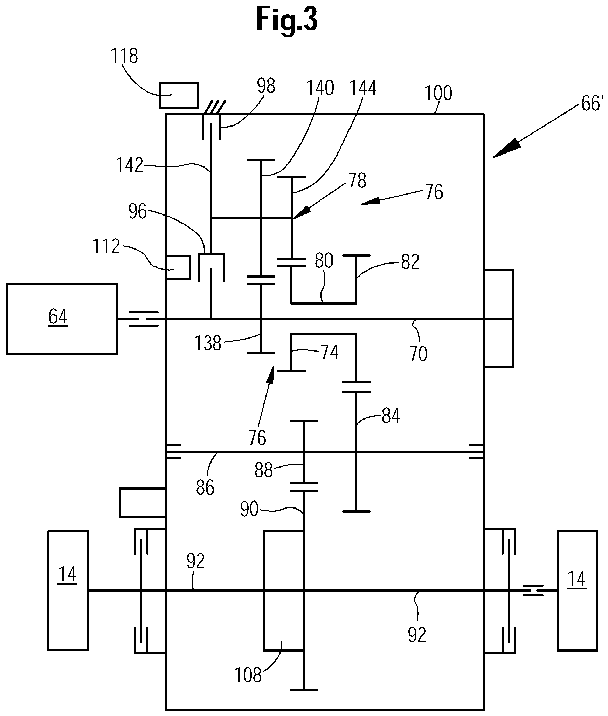

In der Figur 3 ist eine andere Ausführungsform eines Getriebes 66' dargestellt, die anstelle des Getriebes 66 aus Figur 2 verwendbar ist. Das Getriebe 66' unterscheidet sich im Wesentlichen nur durch die Ausführung des Planetengetriebes 76' von der Ausführungsform nach Figur 2, während die übrigen Elemente übereinstimmen. Das Getriebe 66' umfasst ein auf der Eingangswelle 70 angeordnetes Zahnrad 138, das mit einem Planetenradsatz 140 kämmt, der auf einem Planetenradträger 78 angeordnet ist. Der den Planetenradsatz 140 halternde Planetenradträger 78 ist außerdem mit einer Scheibe 142 gekoppelt, die mit der Bremse 98 in Eingriff bringbar ist, und über die Kupplung 96 mit der Eingangswelle 70 kuppelbar. Außerdem ist der Planetenradträger 78 mit einem zweiten Planetenradsatz 144 versehen, dessen Planetenräder mit dem Sonnenrad 74 kämmen, welches an der zum Abtrieb dienenden Hohlwelle 80 angebracht ist. Die Planetenräder der Planetenradsätze 140 und 144 sind untereinander jeweils drehmomentschlüssig verbunden.

Ist die Bremse 118 durch den Aktor 118 aktiviert und die Kupplung 96 durch den Aktor 112 deaktiviert, wird der Planetenradträger 78 stationär gehalten. Der Drehmomentfluss geht über die Eingangswelle 78, das Zahnrad 138, die Zahnräder des Planetenradsatzes 140, die Zahnräder des Planetenradsatzes 144 und das Sonnenrad 74 zur Hohlwelle 80 und von dort weiter zu den Rädern 14, wie oben beschrieben. Der Planetenradträger 78 bleibt stationär.

Ist die Bremse 98 deaktiviert und die Kupplung 96 aktiviert, erfolgt die Kraftübertragung über die Eingangswelle 70 über die Kupplung 96 auf den Planetenradträger 78, von dort über den zweiten Planetenradsatz 144 auf das Sonnenrad 74 und auf die Hohlwelle 80 und von dort weiter zu den Rädern 14, wie oben beschrieben. In diesem Fall ist das Planetengetriebe 76' in sich gesperrt, während man bei aktivierter Bremse 98 und deaktivierter Kupplung 96 eine Untersetzung erhält. Die erste Übersetzungsstufe entspricht bei dieser Ausführungsform somit einer aktivierten Bremse 98 und einer deaktivierten Kupplung 96, während die zweite Übersetzungsstufe einer deaktivierten Bremse 98 und einer aktivierten Kupplung 96 entspricht. Auch bei dieser Ausführungsform erfolgt das Schalten der Kupplung und der Bremse jeweils zeitverzögert, um ein Blockieren des Getriebes 66 zu verhindern.

## Patentansprüche

1. Antriebssystem einer selbstfahrenden Arbeitsmaschine (10), mit einem Verbrennungsmotor (38), der betreibbar ist, über ein Getriebe (66) mit mindestens zwei wählbaren Übersetzungsstufen im Eingriff mit dem Erdboden befindliche Elemente zum Vortrieb der Arbeitsmaschine (10) anzutreiben, wobei eine Steuerung (40) mit einem zur Wahl der Übersetzungsstufe des Getriebes (66) eingerichteten Aktor (112, 118) verbunden und betreibbar ist, die Übersetzungsstufe des Getriebes (66) selbsttätig auszuwählen, der Verbrennungsmotor (38) mit einer Hydropumpe (48) verbunden ist, die hydraulikflüssigkeitsleitend mit einem Hydromotor (64) verbunden ist, der mit dem Getriebe (66) antriebsverbunden ist, die Hydropumpe (48) und/oder der Hydromotor (64) durch die Steuerung (64) verstellbar sind und die Steuerung (40) betreibbar ist, die Übersetzungsstufe abhängig von der Vortriebsgeschwindigkeit und von Betriebsdaten der Hydropumpe (48) und/oder des Hydromotors (64) auszuwählen, indem sie die Übersetzung abhängig vom Druck im Hydrauliksystem steuert und einen Übergang von einer zweiten Übersetzungsstufe, mit einem höheren Übersetzungsverhältnis als eine erste Übersetzungsstufe, in die erste Übersetzungsstufe des Getriebes (66) veranlasst, sobald eine durch Geschwindigkeitssensoren (110, 124) gemessene Vortriebsgeschwindigkeit unter einen Grenzwert fällt oder ein den am Hydromotor (64) anstehenden Druck des Hydraulikfluids erfassender Drucksensor (114) einen oberhalb eines Schwellenwerts liegenden Wert liefert, wobei der Grenzwert für die Geschwindigkeit zum Herunterschalten etwas tiefer als der Grenzwert zum Hochschalten liegt.

2. Antriebssystem nach Anspruch 1, **dadurch gekennzeichnet, dass** die Steuerung (40) betreibbar ist, die Übersetzungsstufe abhängig von einer erkannten Betriebsart der Arbeitsmaschine (10) auszuwählen.

3. Antriebssystem nach Anspruch 2, **dadurch gekennzeichnet, dass** die Steuerung (40) betreibbar ist, die Betriebsart der Arbeitsmaschine (10) anhand einer durch eine Bedienungsperson bedienbaren Betriebsartenwahleinrichtung (126) zu erkennen.

4. Antriebssystem nach Anspruch 2 oder 3, **dadurch gekennzeichnet, dass** die Steuerung (40) betreibbar ist, die Betriebsart der Arbeitsmaschine (10) anhand des Betriebszustandes eines Elements der Arbeitsmaschine (10) zu erkennen.

5. Antriebssystem nach einem der Ansprüche 1 bis 4, **dadurch gekennzeichnet, dass** die Drehzahl des Verbrennungsmotors (38) durch die Steuerung (40) vorgebbar ist.

6. Antriebssystem nach Anspruch 5, **dadurch gekennzeichnet, dass** die Drehzahl des Verbrennungsmotors (38) durch die Steuerung (40) abhängig davon steuerbar ist, ob sich die Arbeitsmaschine (10) in einer Arbeitsbetriebsart oder einer Transport- oder Straßenbetriebsart befindet.

7. Antriebssystem nach Anspruch 6, **dadurch gekennzeichnet, dass** die Steuerung (40) betreibbar ist, im Arbeitsbetrieb eine feste Drehzahl des Verbrennungsmotors (38) vorzugeben und/oder dem Bediener die Möglichkeit zu geben, die Drehzahl des Verbrennungsmotors (38) aus dem gesamten verfügbaren Drehzahlbereich oder einem Teilbereich daraus auszuwählen.

8. Antriebssystem nach Anspruch 6 oder 7, **dadurch gekennzeichnet, dass** die Steuerung (40) betreibbar ist, in einer Transport- oder Straßenbetriebsart eine feste oder von der Belastung des Verbrennungsmotors (38) abhängige Drehzahl des Verbrennungsmotors (38) vorzugeben.

9. Antriebssystem nach einem der vorhergehenden Ansprüche, **dadurch gekennzeichnet, dass** die Steuerung (40) betreibbar ist, in einer Arbeitsbetriebsart eine von der Auslastung der Arbeitsmaschine (10) abhängige Vortriebsgeschwindigkeit der Arbeitsmaschine (10) zu erzielen.

10. Antriebssystem nach einem der vorhergehenden Ansprüche, **dadurch gekennzeichnet, dass** das Getriebe (66) ein Planetengetriebe (76, 76') mit einem Sonnenrad (74) und einem Planetenradträger (78) umfasst, dass das Planetengetriebe (76, 76') in einer Übersetzungsstufe in sich blockiert ist und dass ein Element des Planetengetriebes (76, 76') bei einer Übersetzungsstufe mit einem der anderen Elemente des Planetengetriebes (76) und/oder einer Ausgangs- bzw. Eingangswelle (70) gekoppelt ist und bei einer anderen Übersetzungsstufe angehalten wird.

11. Arbeitsmaschine (10), insbesondere selbstfahrende Erntemaschine, mit einem Antriebssystem nach einem der vorhergehenden Ansprüche.

## Claims

1. Propulsion system of a self-propelled machine (10), with an internal combustion engine (38) which can be operated so as to use a gearing (66) having at least two selectable multiplication steps to propel elements, which are in engagement with the earth, for advancing the machine (10), wherein a controller (40) is connected to an actuator (112, 118) which is designed to select the multiplication step of the gearing (66), and can be operated so as to select the multiplication step of the gearing (66) automatically, the internal combustion engine (38) is connected to a hydraulic pump (48) which is connected in a hydraulic-fluid-conducting manner to a hydraulic motor (64) which is drive-connected to the gearing (66), the hydraulic pump (48) and/or the hydraulic motor (64) can be adjusted by means of the controller (64) and the controller (40) can be operated to select the multiplication step as a function of the advancing speed and of operating data of the hydraulic pump (48) and/or of the hydraulic motor (64) by the controller controlling the multiplication as a function of the pressure in the hydraulic system and bringing about a transition from a second multiplication step, having a higher transmission ratio than a first multiplication step, into the first multiplication step of the gearing (66) as soon as an advancing speed, measured by speed sensors (110, 124), drops below a limit value or a pressure sensor (114) sensing the hydraulic fluid pressure present at the hydraulic motor (64) supplies a value lying above a threshold value, wherein the limit value for the speed for changing down lies somewhat lower than the limit value for changing up.

2. Propulsion system according to Claim 1, **characterized in that** the controller (40) can be operated so as to select the multiplication step as a function of an identified operating mode of the machine (10).

3. Propulsion system according to Claim 2, **characterized in that** the controller (40) can be operated so as to identify the operating mode of the machine (10) with reference to an operating-mode-selecting device (126) which is operable by an operator.

4. Propulsion system according to Claim 2 or 3, **characterized in that** the controller (40) is operable in order to identify the operating mode of the machine (10) with reference to the operating state of an element of the machine (10).

5. Propulsion system according to one of Claims 1 to 4, **characterized in that** the rotational speed of the internal combustion engine (38) can be predetermined by the controller (40).

6. Propulsion system according to Claim 5, **characterized in that** the rotational speed of the internal combustion engine (38) can be controlled by the controller (40) as a function of whether the machine (10) is in a working operating mode or a transport or road operating mode.

7. Propulsion system according to Claim 6, **characterized in that** the controller (40) can be operated so as to predetermine a fixed rotational speed of the internal combustion engine (38) in the working mode and/or so as to give the operator the option of selecting the rotational speed of the internal combustion engine (38) from the entire available rotational speed range or from a partial range thereof.

8. Propulsion system according to Claim 6 or 7, **characterized in that** the controller (40) can be operated so as, in a transport or road operating mode, to predetermine a rotational speed of the internal combustion engine (38) which is fixed or dependent on the loading of the internal combustion engine (38).

9. Propulsion system according to one of the preceding claims , **characterized in that** the controller (40) is operable in order, in a working operating mode, to obtain an advancing speed of the machine (10), said advancing speed being dependent on the loading of the machine (10).

10. Propulsion system according to one of the preceding claims, **characterized in that** the gearing (66) comprises a planetary gearing (76, 76') with a sun wheel (74) and a planet wheel carrier (78), **in that** the planetary gearing (76, 76') is blocked per se in a multiplication step and **in that**, during one multiplication step, one element of the planetary gearing (76, 76') is coupled to one of the other elements of the planetary gearing (76) and/or to an output and input shaft (70) and is brought to rest in another multiplication step.

11. Machine (10), in particular self-propelled harvesting machine, having a propulsion system according to one of the preceding claims.

## Revendications

1. Système d'entraînement pour un engin de travail autopropulsé (10), comprenant un moteur à combustion interne (38), qui peut être utilisé pour entraîner, par le biais d'une transmission (66) avec au moins deux rapports de démultiplication sélectionnables, des éléments pour faire avancer l'engin de travail (10), se trouvant en prise avec le sol, dans lequel une commande (40) est connectée à un actionneur (112, 118) prévu pour sélectionner le rapport de démultiplication de la transmission (66) et peut être utilisée pour sélectionner le rapport de démultiplication de la transmission (66) automatiquement, le moteur à combustion interne (38) est connecté à une pompe hydraulique (48), qui est connectée par conduction de fluide hydraulique à un moteur hydraulique (64), qui est connecté par entraînement à la transmission (66), la pompe hydraulique (48) et/ou le moteur hydraulique (64) peuvent être réglés par la commande (64) et la commande (40) peut être utilisée pour sélectionner le rapport de démultiplication en fonction de la vitesse d'avance et de données de fonctionnement de la pompe hydraulique (48) et/ou du moteur hydraulique (64) par le fait que la commande commande la démultiplication en fonction de la pression dans le système hydraulique et permet une transition d'un deuxième rapport de démultiplication avec un niveau de démultiplication supérieur à un premier rapport de démultiplication, dans le premier rapport de démultiplication de la transmission (66), dès qu'une vitesse d'avance mesurée par des capteurs de vitesse (110, 124) chute en dessous d'une valeur limite ou qu'un capteur de pression (114) détectant la pression du fluide hydraulique s'appliquant au moteur hydraulique (64) fournit une valeur supérieure à une valeur seuil, la valeur limite pour la vitesse de rétrogradage étant un peu plus basse que la valeur limite pour un passage à une vitesse supérieure.

2. Système d'entraînement selon la revendication 1, **caractérisé en ce que** la commande (40) peut être utilisée pour sélectionner le rapport de démultiplication en fonction d'un mode de fonctionnement détecté de l'engin de travail (10).

3. Système d'entraînement selon la revendication 2, **caractérisé en ce que** la commande (40) peut être utilisée pour reconnaître le mode de fonctionnement de l'engin de travail (10) à l'aide d'un dispositif de sélection de mode de fonctionnement (126) pouvant être actionné par un opérateur.

4. Système d'entraînement selon la revendication 2 ou 3, **caractérisé en ce que** la commande (40) peut être utilisée pour reconnaître le mode de fonctionnement de l'engin de travail (10) à l'aide de l'état de fonctionnement d'un élément de l'engin de travail (10).

5. Système d'entraînement selon l'une quelconque des revendications 1 à 4, **caractérisé en ce que** le régime du moteur à combustion interne (38) peut être prédéfini par la commande (40).

6. Système d'entraînement selon la revendication 5, **caractérisé en ce que** le régime du moteur à combustion interne (38) peut être commandé par la commande (40) en fonction de la position de l'engin de travail (10) dans un mode de fonctionnement de travail ou dans un mode de fonctionnement de transport ou de route.

7. Système d'entraînement selon la revendication 6, **caractérisé en ce que** la commande (40) peut être utilisée pour prédéfinir en mode de fonctionnement de travail un régime fixé du moteur à combustion interne (38) et/ou pour fournir à l'opérateur la possibilité de sélectionner le régime du moteur à combustion interne (38) à partir de la plage de régime totale disponible ou à partir d'une plage partielle.

8. Système d'entraînement selon la revendication 6 ou 7, **caractérisé en ce que** la commande (40) peut être utilisée dans un mode de fonctionnement de transport ou de route pour prédéfinir un régime du moteur à combustion interne (38) fixé ou dépendant de la charge du moteur à combustion interne (38).

9. Système d'entraînement selon l'une quelconque des revendications précédentes, **caractérisé en ce que** la commande (40) peut être utilisée pour obtenir, dans un mode de fonctionnement de travail, une vitesse d'avance de l'engin de travail (10) dépendant du taux d'utilisation de l'engin de travail (10).

10. Système d'entraînement selon l'une quelconque des revendications précédentes, **caractérisé en ce que** la transmission (66) comprend un engrenage planétaire (76, 76') avec une roue solaire (74) et un porte-planétaire (78), **en ce que** l'engrenage planétaire (76, 76') est bloqué en soi dans un rapport de démultiplication et **en ce qu'**un élément de l'engrenage planétaire (76, 76'), dans un rapport de démultiplication, est accouplé avec l'un des autres éléments de l'engrenage planétaire (76) et/ou avec un arbre de sortie ou d'entrée (70) et est arrêté dans un autre rapport de démultiplication.

11. Engin de travail (10), en particulier engin agricole autopropulsé, comprenant un système d'entraînement selon l'une quelconque des revendications précédentes.
